# FASCICULE DE BREVET EUROPEEN

(11) **EP 0 870 602 B1**
(45) Date de publication et mention de la délivrance du brevet: **12.11.2008**
(21) Numéro de dépôt: 98400588.4
(22) Date de dépôt: 12.03.1998
(51) Int. Cl.: B32B 17/10, B29C 47/00, C03C 27/12

(54) **Vitrage feuilleté et son procédé de fabrication**
Verbundglasscheibe und Verfahren zur seiner Herstellung
Laminated glazing and method for making same

(30) Priorité: 10.04.1997 FR 9704413
(43) Date de publication de la demande: 14.10.1998
(73) Titulaire: SAINT-GOBAIN GLASS FRANCE, 92400 Courbevoie (FR)
(72) Inventeur: Leclercq, Philippe, 91390 Morsang Sur Orge (FR)
(74) Mandataire: Muller, René

(56) Documents cités:
- EP-A- 0 060 759
- EP-A- 0 210 923
- EP-A- 0 274 295
- FR-A- 2 158 287
- US-A- 4 244 997
- US-A- 4 316 868

## Description

La présente invention est relative à un vitrage feuilleté comprenant au moins un substrat rigide, notamment en verre, et à son procédé de fabrication.

L'invention sera plus particulièrement décrite pour une utilisation en tant que pare-brise d'un véhicule automobile mais elle n'est pas limitée à une telle application.

Les vitrages feuilletés, notamment de sécurité, sont usuellement formés soit de deux substrats de verre et d'un intercalaire avec au moins une feuille en matière plastique, notamment thermoplastique à base de polyvinybutyral PVB, soit d'un substrat transparent avec au moins une feuille plastique à base de polyuréthane dans le cas d'un vitrage asymétrique.

Lorsqu'un tel vitrage est utilisé en tant que pare-brise d'un véhicule automobile, il comporte fréquemment une bande colorée, qui, le cas échéant, présente une teinte dégradée dans sa partie inférieure.

Cette bande colorée, généralement verte, a pour fonction de réduire l'intensité de la lumière du soleil à travers le pare-brise de manière à éviter l'éblouissement du conducteur du véhicule automobile ainsi que de son passager avant.

Pour obtenir une telle bande colorée sur un pare-brise, il est connu, de manière judicieuse, de l'incorporer à la feuille intercalaire thermoplastique par une technique dite de « co-extrusion » telle que celle proposée dans le document US 4 316 868. Ce document décrit un appareil pour l'extrusion d'une feuille de polymère thermoplastique comprenant un réservoir en forme de torpille. Ce réservoir contient, selon son axe longitudinal, une fente d'extrusion pour incorporer en amont d'une autre fente d'extrusion, un courant coloré qui se mélange à un courant principal de matière plastique fondue alimenté par une filière. On obtient ainsi une feuille de polymère, avec une bande colorée à gradient de coloration qui s'étend le long d'un bord de la feuille de polymère.

Jusqu'à présent, de par les limites intrinsèques des procédés de fabrication existants et de par certains paramètres que sont notamment la taille du vitrage, son inclinaison par rapport à l'horizontale et la position relative du conducteur assis par rapport au vitrage, la bande colorée susmentionnée se situait nécessairement en partie périphérique supérieure du vitrage. Or, il serait intéressant de pouvoir la positionner dans une autre partie du vitrage, notamment lorsque la hauteur du vitrage est plus élevée ou pour des raisons d'ordre esthétique.

Le but de l'invention est alors de fournir un vitrage feuilleté contenant, une bande colorée, de largeur donnée, dégradée ou non, d'une grande durabilité, dont on puisse moduler la localisation, notamment avec la taille du vitrage, et qui soit susceptible de jouer le même rôle que la bande colorée en limite supérieure d'un pare-brise, notamment un rôle de protection visuelle d'une personne située derrière le vitrage contre son éblouissement à la lumière du soleil, sans que cela se fasse au détriment de l'aspect esthétique.

Un autre but de l'invention est de proposer un procédé de fabrication d'un tel vitrage dont la mise en oeuvre soit simple et compatible avec les lignes de fabrication usuelles de vitrages feuilletés sans engendrer de surcoût notable.

Pour ce faire, l'invention a pour objet un vitrage feuilleté comportant au moins un substrat rigide, notamment en verre, et un intercalaire comprenant au moins une feuille de matière thermoplastique, notamment à base de polyvinylbutyral PVB, contenant au moins une bande colorée. Selon l'invention, au moins une bande colorée est située en partie centrale du vitrage.

Par « partie centrale » du vitrage, il faut comprendre ici et dans la suite du texte, une partie dans laquelle aucun des bords longitudinaux de la bande colorée ne s'étend sur un des bords du vitrage.

En outre, lorsque le vitrage selon l'invention est un pare-brise de véhicule automobile, il répond parfaitement aux critères de visibilité imposés par les normes d'homologation telles que la norme ANSI/SAE 226.1 1990.

L'intercalaire peut comprendre au moins une feuille à base d'autre(s) polymère(s) organique(s) notamment du type polyuréthane (PU) et/ou éthylènevinylacétate (EVA) et/ou chlorure de polyvinyle (PVC) et/ou polyester du type polyéthylènetéréphtalate (PET) et/ou polycarbonate, polypropylène et/ou polyéthylène et/ou polyméthacrylate.

Selon une première caractéristique, et afin de rendre plus esthétique le vitrage, la bande colorée peut présenter au moins un gradient de coloration dans sa largeur vers le bas et/ou vers le haut du vitrage. Par « haut » et « bas » du vitrage, il faut comprendre ici et dans la suite du texte la partie supérieure et respectivement inférieure du vitrage, une fois le vitrage monté dans son support ou châssis, qui est la carrosserie dans le cas d'un véhicule automobile.

Selon une autre caractéristique, la bande colorée peut comporter au moins deux bandes colorées juxtaposées, le cas échéant de teintes différentes, par exemple verte et bleue.

Dans certaines applications où la hauteur du vitrage est considérable, le vitrage peut présenter avantageusement au moins une zone pourvue d'un revêtement opacifiant et située au-dessus de la bande colorée. Comme revêtement opacifiant, il peut être choisi un émail déposé sur la face extérieure ou intérieure du substrat ou une encre par exemple sérigraphiée ou imprimée.

De préférence, la zone opacifiée chevauche légèrement la bande colorée.

Dans ce même type d'applications, le vitrage peut présenter au moins une « fenêtre » dans la zone opacifiée, ce qui permet, de manière avantageuse, de localiser sur un même vitrage des fonctionnalités très différentes. Par « fenêtre », il faut comprendre ici et dans la suite du texte, une zone transparente, c'est-à-dire non pourvue du revêtement opacifiant.

Ainsi, dans le cas d'un pare-brise de bus, il est intéressant :
- de pouvoir incorporer, dans la partie haute, une fenêtre principale notamment destinée à permettre la visualisation d'informations fournies à l'aide d'un dispositif d'affichage, éventuellement à cristaux liquides, de taille adhoc et situé à l'intérieur de l'habitacle,
- d'insérer, dans la partie médiane haute, une zone opacifiée de manière à harmoniser l'intégration de cette fenêtre dans le pare-brise,
- de disposer en partie médiane la bande colorée selon l'invention pour éviter l'éblouissement du chauffeur de bus.

L'invention concerne également le procédé de fabrication du vitrage feuilleté précédemment défini, procédé qui consiste à empiler en les ajustant le(s) substrat(s) rigide(s), notamment en verre, et un intercalaire comprenant au moins une feuille de matière thermoplastique, notamment à base de PVB et à feuilleter le vitrage feuilleté de facon définitive par action d'une différence de pression et/ou de la chaleur. Selon le procédé de l'invention, et préalablement au feuilletage définitif, on positionne au moins une bande colorée de l'intercalaire en partie centrale du vitrage.

Ce procédé est particulièrement avantageux dans la mesure où il permet d'atteindre le but fixé par l'invention en ne mettant en oeuvre que pas ou peu d'étapes supplémentaires par rapport aux étapes effectuées sur les lignes de fabrication de vitrages feuilletés existantes.

Pour plus de détails sur ces étapes « classiques » de fabrication des vitrages feuilletés, le lecteur pourra se reporter avantageusement, par exemple, aux demandes de brevet EP-A-0 210 923 et EP-A-0 274 295 relatives à l'étape de positionnement de la couche de matière thermoplastique par rapport aux substrats de verre et à la demande de brevet FR 2 447 807 relative au feuilletage définitif du vitrage feuilleté par action conjuguée de la chaleur et de la pression.

Le procédé selon l'invention peut être mis en oeuvre de différentes manières, notamment lorsque l'on désire obtenir un ou plusieurs notamment deux dégradés de couleur unie ou différente dans la bande colorée.

Selon une première variante, on extrude un courant coloré de matière thermoplastique dans un autre courant incolore de matière thermoplastique de largeur au moins égale à la largeur désirée de l'intercalaire.

Selon une deuxième variante, on assemble, notamment en les juxtaposant, au moins une feuille transparente de matière thermoplastique et au moins une feuille de matière thermoplastique colorée ou contenant sur un de ses bords longitudinaux une bande colorée, la somme des largeurs respectives des deux feuilles étant au moins égale à la largeur de l'intercalaire.

On accède ainsi d'une manière simple et peu onéreuse au résultat escompté à partir de feuilles thermoplastiques de largeur conventionnelle directement disponibles sur le marché et utilisées par exemple pour la fabrication de vitrages feuilletés d'une hauteur moins élevée que celle du vitrage conforme à l'invention.

De plus, une fois le feuilletage définitif effectué en respectant les critères d'assemblage conventionnels des vitrages feuilletés, on obtient, de manière surprenante, une démarcation nette, régulière et linéaire au niveau de la ligne d'assemblage sans aucune marque alors que l'on aurait pu s'attendre à avoir des bavures, à tout le moins de légères ondulations dues au fluage réciproque des feuilles de matière thermoplastique lors du chauffage et/ou de la mise sous pression de l'ensemble du vitrage. En outre, aucun défaut optique, notamment aucun flou lumineux, n'apparaît sur le vitrage feuilleté de manière définitive.

De préférence, les deux feuilles assemblées sont faites de la même matière thermoplastique, ce qui permet d'assurer une bonne homogénéité de la matière au niveau de la ligne d'assemblage.

L'assemblage, selon ce mode de réalisation, peut être effectué par soudure le cas échéant en appliquant une pression mécanique. Cette soudure peut être réalisée à une température comprise entre 200 et 250°C, en veillant de toute façon d'une part à obtenir un ramollissement suffisant, d'autre part à ne pas atteindre la température de carbonisation de la (des) matière(s) thermoplastique employée(s).

Avantageusement, on réalise une soudure au moins superficielle des deux feuilles juxtaposées de manière à obtenir la fusion de la (des) matière(s) thermoplastique(s) sur une profondeur au moins égale à 20 % de l'épaisseur desdites feuilles.

De préférence encore, on réalise une soudure continue sur toute la ligne d'assemblage. On augmente, ainsi de manière conséquente, la force d'adhésion entre les deux feuilles thermoplastiques, préalablement à leur mise sous pression et/ou leur chauffage, ce qui peut être nécessaire notamment en cas de sollicitations mécaniques importantes qui ont lieu par exemple lors de manipulations.

Le vitrage à structure feuilletée selon l'invention peut être utilisé dans tous types de vitrages pour moyens de locomotion, terrestre, maritime ou aérien : voiture, véhicules de transport collectif, trains, avions, bateaux et tout particulièrement les vitrages de véhicules, dont la hauteur est nettement supérieure à la hauteur des vitrages « standard », comme, par exemple, les pare-brise de bus. Il peut être également utilisé dans le bâtiment, notamment en tant que vitrine.

D'autres détails et caractéristiques avantageuses de l'invention ressortent ci-après d'un exemple de réalisation non limitatif d'un vitrage selon l'invention décrit en référence aux figures 1, 2 et 3 qui représentent :
- **figure 1** : une vue schématique de la face avant d'un véhicule de transport collectif selon l'art antérieur à l'invention,
- **figure 2** : une vue schématique de la face avant d'un véhicule de transport collectif conforme à l'invention.
- **figure 3** : une vue en coupe de l'intercalaire en PVB d'un vitrage feuilleté conforme à l'invention.

Par souci de clarté, ces figures ne sont pas à l'échelle et ne respectent pas les proportions relatives entre les différents éléments.

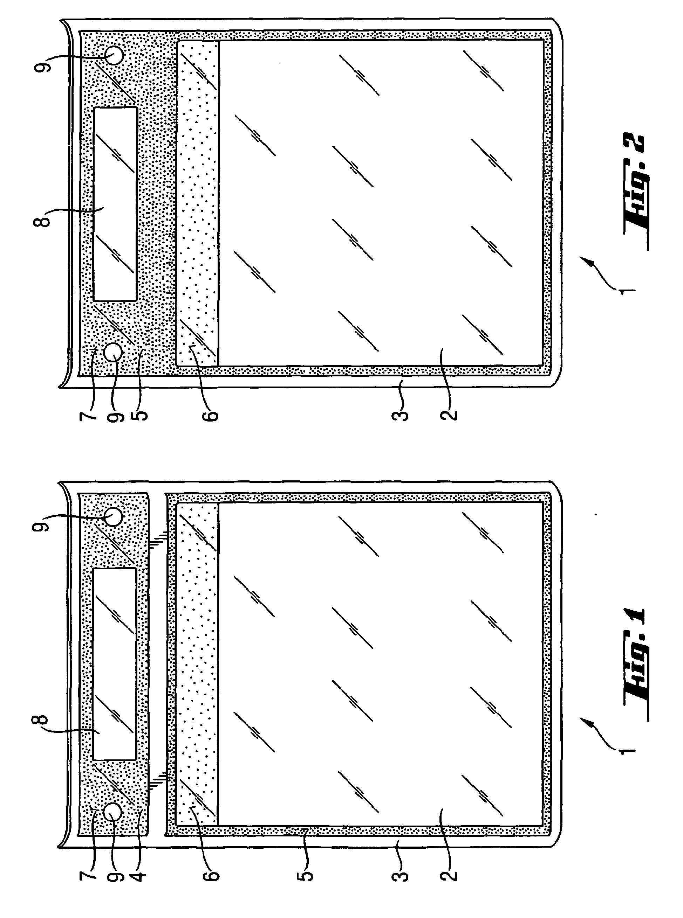

La **figure 1** représente, de manière schématique, la face avant 1 d'un véhicule de transport collectif selon l'état de l'art antérieur.

Celle-ci comporte un pare-brise 2 monté fixe dans la carrosserie 3 du véhicule, au-dessus duquel est situé à quelques centimètres une pièce vitrée 4.

Le pare-brise 2 à structure feuilletée est constituée de deux substrats de verre silico-sodo-calcique clair, chacun d'une épaisseur égale à 2,1; 2,6 ou 2,9 mm, assemblés par une feuille de polyvinylbutyral PVB d'épaisseur 0,76 mm et comporte sur la totalité de se périphérie, de manière connue, une couche d'émail 5 au bord supérieur de laquelle « émarge » une bande dégradée verte 6 d'une largeur visible d'environ 15,5 cm et qui s'étend le long de la feuille de PVB.

La pièce vitrée 4, dont le centrage est assuré par un système non représenté, est constituée d'un seul substrat de verre silico-sodo-calcique clair trempé d'épaisseur égale à 2,1, 2,6 ou 2,9 mm et comporte une couche d'émail 7 de laquelle ressortent une fenêtre rectangulaire 8 appelée « girouette » et deux fenêtres circulaires 9 situées symétriquement de part et d'autre de ladite « girouette ».

En arrière plan, derrière la fenêtre rectangulaire 8 et accolée à celle-ci se trouve un dispositif d'affichage non représenté, apte à fournir les informations relatives à l'identification et à la destination du véhicule.

D'une facon très similaire, derrière chacune des deux fenêtres est agencé un phare non représenté.

Dans cette configuration, l'emplacement et la largeur de la bande colorée 6 sont tels que le chauffeur du véhicule n'est pas ébloui lorsque le soleil a une position azimutale comprise entre 45° et 90°.

La **figure 2** représente également de manière schématique, la face avant 1 d'un véhicule de transport collectif conforme à l'invention.

Celle-ci comporte les mêmes éléments que ceux décrits précédemment à la différence structurelle près que la pièce vitrée 4 n'est plus séparée du pare-brise 2 comme dans le cas de la **figure 1** mais est au contraire « intégrée » en ce sens qu'il reste un seul vitrage, présentant une structure feuilletée.

Du fait de l'augmentation de la hauteur du pare-brise 2, la bande colorée verte 6 de largeur visible égale à 15,5 cm se trouve, dans la configuration de la **figure 2** positionnée en partie centrale du pare-brise 2, la position du chauffeur du véhicule assis par rapport à ce dernier restant par ailleurs inchangée.

D'une part, la bande dégradée verte 6 remplit la même fonction que celle de la bande verte décrite en référence à la **figure 1**, et ceci, dans les mêmes conditions d'éclairement naturel par la lumière du soleil.

D'autre part, le pare-brise 2 de la **figure 2** répond parfaitement aux critères de visibilité imposés par les normes d'homologation telles que la norme ANSI/SAE 226.1.1990.

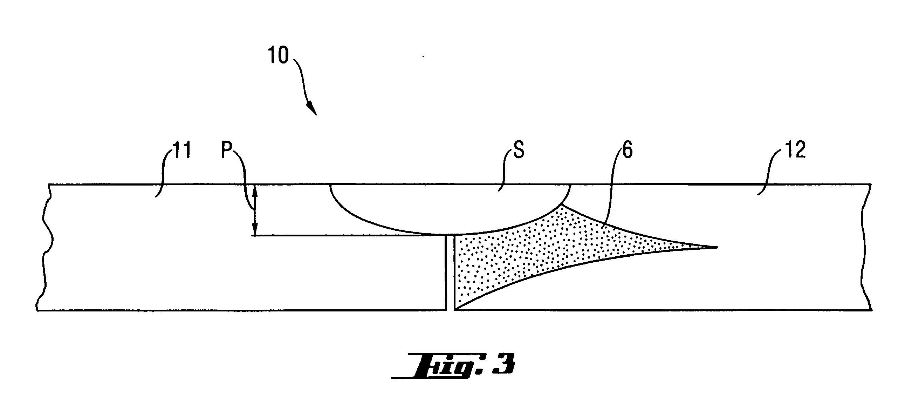

Pour pouvoir « faire descendre » cette bande dégradée verte 6 en partie centrale du pare-brise 2, on procède de la manière suivante : avant de réaliser l'étape « classique » d'empilage ajusté des deux substrats de verre avec l'intercalaire en PVB préalablement à leur feuilletage définitif notamment par autoclave, on fabrique l'intercalaire en PVB 10 adéquat conformément à la **figure 3**.

Sur cette figure, on voit, en vue de coupe, un bord longitudinal d'une feuille de PVB clair 11 juxtaposé, dans un même plan, au bord longitudinal comprenant la bande colorée marginale 6 d'une feuille de PVB 12, de largeur et d'épaisseur identiques, cette feuille 12 étant obtenue conformément à la technique décrite dans le brevet US 4 316 868 précité.

Ces deux feuilles 11 et 12 sont rendues solidaires entre elles dans une zone (S) de profondeur p moyenne qui est de l'ordre de 20 à 30 % de l'épaisseur des feuilles 11, 12.

Pour créer cette zone (S) de solidarisation on amène les deux bords en contact et on réalise leur soudure par chauffage à l'aide d'un fer à souder. L'apport de chaleur peut bien entendu être réalisé par tout autre moyen de préférence en assurant un contact direct avec les feuilles 11, 12, par exemple à l'aide d'une roulette chauffante.

La soudure est faite de préférence selon une ligne continue qui s'étend sur toute la longueur des feuilles 11, 12, ceci afin d'éviter d'éventuelles zones de faiblesse le long de la ligne d'assemblage. Ces zones de faiblesse peuvent être préjudiciables en cas de forte sollicitations mécaniques par exemple lors des manipulations qui ont lieu avant et pendant l'étape d'empilage. Bien entendu une soudure faite en un certain nombre de points répartis uniformément ou non peut parfois suffire. De même, tout au long de la soudure, on veille à ce que la température d'une part soit assez élevée de manière à faire « coller » les deux bords entre eux et d'autre part ne soit pas trop importante pour ne pas carboniser le PVB, c'est-à-dire à ce qu'elle soit de l'ordre de 200 à 250°C.

Ce mode de réalisation est avantageux à plus d'un titre.

Tout d'abord, on utilise des feuilles de PVB « conventionnelles » que l'on peut manipuler aisément sans prendre de précaution particulière et sans avoir à les transformer, la seule condition qui s'impose étant que la somme des largeurs des deux feuilles doit être au moins égale à la hauteur du pare-brise considéré.

De plus, lorsque le pare-brise 2 est muni d'un réseau chauffant continu ou discontinu (fils) en contact avec ou incrusté superficiellement dans l'intercalaire en PVB 10, le choix de la bande colorée verte 6 ainsi coextrudée dans la feuille 12 s'avère être judicieux. En effet, puisque tout contact direct entre cette même bande colorée verte 6 et le réseau chauffant est évité, alors il n'y a pas d'interaction possible entre ces éléments.

Et, par voie de conséquence, on s'affranchit de tout risque de dénaturation de la couleur et/ou d'attaque du réseau chauffant, par exemple des fils métalliques, susceptible de se produire par le dégagement de chaleur du réseau chauffant.

Enfin, on obtient une grande précision sur la localisation de la bande colorée 6. Par exemple, on peut choisir de ne pas montrer le changement de teinte en partie médiane du vitrage et par conséquent de masquer la zone « soudée » par la zone émaillée, c'est-à-dire à la jonction des deux colorations.

En conclusion, l'invention amène une grande souplesse dans le choix de la localisation de la bande colorée d'un vitrage feuilleté. Cette souplesse permet :
- d'une part, d'augmenter la surface vitrée de véhicules de grandes dimensions, tels que les véhicules de transport collectif, et ceci de manière esthétique,
- d'autre part, d'intégrer un maximum d'éléments de fonctionnalités différentes dans un même vitrage, telles qu'une fenêtre d'affichage et/ou d'éclairage, un réseau chauffant...

Dans le cas particulier d'un pare-brise de véhicule de transport collectif, de toutes ces caractéristiques découlent des avantages indéniables quant à la simplicité de montage du vitrage dans la carrosserie. En effet, du fait qu'il est une pièce « mono-bloc », il ne nécessite la pose que d'un joint unique et, surtout, il permet de s'affranchir du système de centrage de la « girouette » et de toutes les opérations longues et minutieuses s'y rapportant.

## Revendications

1. Vitrage feuilleté (2) comportant au moins un substrat rigide, notamment en verre, et un intercalaire (10) comprenant au moins une feuille de matière thermoplastique (12), notamment à base de PVB, contenant au moins une bande colorée (6), **caractérisé en ce qu'** au moins une bande colorée (6) est située en partie centrale dudit vitrage.

2. Vitrage selon la revendication 1, **caractérisé en ce que** la bande colorée est teintée dans la masse de ladite feuille de matière thermoplastique (12).

3. Vitrage selon la revendication 1 ou 2, **caractérisé en ce que** l'intercalaire comprend au moins une feuille à base d'autre()s polymère(s) organique(s), notamment du polyuréthane (PU) et/ou de l'éthylènevinylacétate (EVA) et/ou du chlorure de polyvinyle (PVC) et/ou un polyester du type polyéthylènetéréphtalate (PET) et/ou du polycarbonate et/ou du polypropylène, et/ou du polyéthylène et/ou du polyméthacrylate.

4. Vitrage selon l'une des revendications précédentes, **caractérisé en ce que** ladite bande colorée (6) présente au moins un gradient de coloration dans sa largeur vers le bas et/ou vers le haut du vitrage.

5. Vitrage selon l'une des revendications précédentes, **caractérisé en ce que** ladite bande colorée (6) présente au moins deux bandes colorées juxtaposées, le cas échéant de teintes différentes, par exemple verte et bleue.

6. Vitrage selon l'une des revendications précédentes, **caractérisé en ce qu'**il présente au moins une zone (5) pourvue d'un revêtement opacifiant et située au-dessus de ladite bande colorée (6).

7. Vitrage selon la revendication 6, **caractérisé en ce que** ladite zone opacifiée (5), notamment émaillée chevauche légèrement ladite bande colorée.

8. Vitrage selon la revendication 6 ou 7, **caractérisé en ce qu'**il présente au moins une fenêtre dans ladite zone opacifiée (5).

9. Vitrage selon la revendication 8, **caractérisé en ce qu'**il comporte derrière au moins une fenêtre (8, 9) un dispositif d'affichage et/ou un dispositif d'éclairage, tel qu'un phare.

10. Vitrage selon l'une des revendications précédentes, **caractérisé en ce qu'**il est muni d'un réseau chauffant, le cas échéant incrusté dans au moins une des feuilles de l'intercalaire.

11. Vitrage selon l'une des revendications précédentes, **caractérisé en ce qu'**il constitue un vitrage de véhicule automobile, bus ou camion, notamment un pare-brise, un vitrage latéral, une lunette arrière.

12. Procédé de fabrication d'un vitrage feuilleté (2) comportant au moins un substrat rigide, notamment en verre, et un intercalaire (10) comprenant au moins une feuille de matière thermoplastique (12), notamment à base de PVB, contenant au moins une bande colorée (6), **caractérisé en ce qu'**il comporte les étapes suivantes :
a) on empile en les ajustant le(s) substrat(s) et la(les) feuille(s) de matière thermoplastique (11,12),
b) on positionne au moins une bande colorée (6) de la feuille de matière thermoplastique (12) en partie centrale du vitrage
c) on feuillette le vitrage feuilleté (2) de façon définitive par action d'une différence de pression et/ou de la chaleur.

13. Procédé selon la revendication 12, **caractérisé en ce qu'**on extrude un courant coloré de matière plastique dans un autre courant incolore de matière plastique de manière à obtenir une seule feuille de matière thermoplastique de largeur au moins égale à la largeur désirée de l'intercalaire.

14. Procédé selon la revendication 12, **caractérisé en ce qu'**on assemble, notamment en les juxtaposant, au moins une feuille transparente de matière thermoplastique (11) et au moins une feuille de matière thermoplastique (12) colorée ou contenant sur un de ses bords longitudinaux une bande colorée (6), la somme des largeurs respectives des deux feuilles étant au moins égale à la largeur de l'intercalaire (10).

15. Procédé selon la revendication 14, **caractérisé en ce qu'**on assemble deux feuilles (11, 12) faites de la même matière thermoplastique, de préférence du PVB.

16. Procédé selon la revendication 14 ou 15, **caractérisé en ce qu'**on réalise l'assemblage par soudure, le cas échéant en appliquant une pression mécanique.

17. Procédé selon la revendication 16, **caractérisé en ce qu'**on réalise la soudure à une température comprise entre la température de ramollissement et la température de fusion de la (des) matière (s) thermoplastique (s), notamment entre 200 et 250 °C.

18. Procédé selon la revendication 15 ou 17, **caractérisé en ce qu'**on réalise une soudure au moins superficielle des deux feuilles (11, 12) juxtaposées de manière à obtenir la fusion de la(des) matière(s) thermoplastique(s) sur une profondeur p au moins égale à 20 % de l'épaisseur desdites feuilles.

19. Procédé selon l'une des revendications 16 à 18, **caractérisé en ce qu'**on réalise une soudure continue sur toute la ligne d'assemblage.

20. Application du procédé selon l'une des revendications 12 à 19 à la fabrication de vitrages feuilletés de véhicules automobiles, tels que le pare-brise, les vitrages latéraux, la lunette arrière.

## Claims

1. Laminated glazing (2) comprising at least one rigid, especially glass, substrate and an interlayer (10) comprising at least one sheet (12) of thermoplastic, especially based on PVB, containing at least one coloured strip (6), **characterized in that** at least one coloured strip (6) is located in the central part of said glazing.

2. Glazing according to Claim 1, **characterized in that** the coloured strip is tinted within the thickness of said thermoplastic sheet (12).

3. Glazing according to Claim 1 or 2, **characterized in that** the interlayer comprises at least one sheet based on one or more other organic polymers, especially polyurethane (PU) and/or ethylene/vinyl acetate (EVA) and/or polyvinyl chloride (PVC) and/or a polyester of the polyethylene terephthalate (PET) type and/or polycarbonate and/or polypropylene and/or polyethylene and/or polymethacrylate.

4. Glazing according to one of the preceding claims, **characterized in that** said coloured strip (6) has at least one colour gradation over its width towards the bottom and/or towards the top of the glazing.

5. Glazing according to one of the preceding claims, **characterized in that** said coloured strip (6) has at least two juxtaposed coloured strips, where appropriate of different tints, for example green and blue.

6. Glazing according to one of the preceding claims, **characterized in that** it has at least one zone (5) provided with an opacifying coating, said zone being located above said coloured strip (6).

7. Glazing according to Claim 6, **characterized in that** said opacified, especially enamelled, zone (5) slightly overlaps said coloured strip.

8. Glazing according to Claim 6 or 7, **characterized in that** it has at least one window in said opacified zone (5).

9. Glazing according to Claim 8, **characterized in that** it includes, behind at least one window (8, 9), a display device and/or an illumination device, such as a headlight.

10. Glazing according to one of the preceding claims, **characterized in that** it is provided with a heating network, where appropriate encrusted into at least one of the sheets of the interlayer.

11. Glazing according to one of the preceding claims, **characterized in that** it constitutes glazing for a motor vehicle, bus or lorry, especially a windscreen, a side window or a rear window.

12. Process for manufacturing a laminated glazing (2) comprising at least one rigid, especially glass, substrate and an interlayer (10) comprising at least one sheet (12) of thermoplastic, especially based on PVB, containing at least one coloured strip (6), **characterized in that** it comprises the following steps:
a) the one or more substrates and the one or more thermoplastic sheets (11, 12) are stacked, these being adjusted;
b) at least one coloured strip (6) of the thermoplastic sheet (12) is positioned in the central part of the glazing; and
c) the laminated glazing (2) is definitively laminated by the action of a pressure difference and/or heat.

13. Process according to Claim 12, **characterized in that** a coloured plastic stream is extruded into another, colourless plastic stream so as to obtain a single sheet of thermoplastic with a width at least equal to the desired width of the interlayer.

14. Process according to Claim 12, **characterized in that** at least one transparent thermoplastic sheet (11) and at least one coloured thermoplastic sheet (12), or one containing a coloured strip (6) on one of its longitudinal edges, are joined, in particular by juxtaposing them, the sum of the respective widths of the two sheets being at least equal to the width of the interlayer (10).

15. Process according to Claim 14, **characterized in that** two sheets (11, 12) made of the same thermoplastic, preferably PVB, are joined.

16. Process according to Claim 14 or 15, **characterized in that** the joining is carried out by welding, where appropriate by applying mechanical pressure.

17. Process according to Claim 16, **characterized in that** the welding is carried out at a temperature between the softening point and the melting point of the thermoplastic(s), especially between 200°C and 250°C.

18. Process according to Claim 15 or 17, **characterized in that** at least superficial welding of the two juxtaposed sheets (11, 12) is carried out so as to melt the thermoplastic(s) over a depth p at least equal to 20% of the thickness of said sheets.

19. Process according to one of Claims 16 to 18, **characterized in that** a continuous weld is produced along the entire join line.

20. Application of the process according to one of Claims 12 to 19 for the manufacture of laminated glazing for motor vehicles, such as windscreens, side windows and rear windows.

## Patentansprüche

1. Verbundglasscheibe (2), die mindestens ein starres Substrat, speziell aus Glas, und eine Zwischenschicht (10) umfasst, die wenigstens eine Folie (12) aus einem thermoplastischen Material, insbesondere auf der Basis von PVB, die mindestens ein Farbband (6) enthält, umfasst, **dadurch gekennzeichnet, dass** sich mindestens ein Farbband (6) im mittleren Teil dieser Glasscheibe befindet.

2. Glasscheibe nach Anspruch 1, **dadurch gekennzeichnet, dass** das Farbband in die Masse der Folie (12) aus thermoplastischem Material eingefärbt worden ist.

3. Glasscheibe nach Anspruch 1 oder 2, **dadurch gekennzeichnet, dass** die Zwischenschicht mindestens eine Folie auf der Basis von einem oder mehreren anderen organischen Polymeren, insbesondere Polyurethan (PU) und/oder Ethylenvinylacetat (EVA) und/oder Polyvinylchlorid (PVC) und/oder einem Polyester vom Typ Polyethylenterephthalat (PET) und/ oder Polycarbonat und/oder Polypropylen und/oder Polyethylen und/oder Polymethacrylat, umfasst.

4. Glasscheibe nach einem der vorhergehenden Ansprüche, **dadurch gekennzeichnet, dass** das Farbband (6) in der Breite mindestens einen Farbgradienten nach unten und/oder oben der Glasscheibe aufweist.

5. Glasscheibe nach einem der vorhergehenden Ansprüche, **dadurch gekennzeichnet, dass** das Farbband (6) mindestens zwei nebeneinander liegende Farbbänder, gegebenenfalls mit unterschiedlichen Farbtönen, beispielsweise Grün und Blau, aufweist.

6. Glasscheibe nach einem der vorhergehenden Ansprüche, **dadurch gekennzeichnet, dass** sie mindestens einen Bereich (5) aufweist, der mit einer opak machenden Beschichtung versehen ist und sich oberhalb des Farbbandes (6) befindet.

7. Glasscheibe nach Anspruch 6, **dadurch gekennzeichnet, dass** der insbesondere emaillierte opak gemachte Bereich (5) das Farbband leicht überlappt.

8. Glasscheibe nach Anspruch 6 oder 7 **dadurch gekennzeichnet, dass** sie in dem opak gemachten Bereich (5) mindestens ein Fenster aufweist.

9. Glasscheibe nach Anspruch 8, **dadurch gekennzeichnet, dass** sie hinter mindestens einem Fenster (8, 9) eine Anzeige- und/oder eine Beleuchtungsvorrichtung wie einen Scheinwerfer umfasst.

10. Glasscheibe nach einem der vorhergehenden Ansprüche, **dadurch gekennzeichnet, dass** sie mit einem Beheizungsnetz versehen ist, das gegebenenfalls in mindestens eine der Folien der Zwischenschicht eingebettet ist.

11. Glasscheibe nach einem der vorhergehenden Ansprüche, **dadurch gekennzeichnet, dass** sie eine Verglasung eines Kraftfahrzeugs, Autobus oder Lastkraftwagens, insbesondere eine Front-, Seiten- und Heckscheibe, bildet.

12. Verfahren zur Herstellung einer Verbundglasscheibe (2), die mindestens ein starres Substrat, speziell aus Glas, und eine Zwischenschicht (10) umfasst, die wenigstens eine Folie (12) aus einem thermoplastischen Material, insbesondere auf der Basis von PVB, die mindestens ein Farbband (6) enthält, umfasst, **dadurch gekennzeichnet, dass** es folgende Stufen umfasst:
a) Übereinanderlegen des/der Subtrate/s und der Folie/n (11, 12) aus thermoplastischem Material, wobei sie nacheinander ausgerichtet werden,
b) Anbringen mindestens eines Farbbandes (6) der Folie (12) aus thermoplastischem Material im mittleren Teil der Glasscheibe und
c) endgültiges Verbinden der Verbundglasscheibe (2) durch Einwirkung einer Druck- und/oder Wärmedifferenz.

13. Verfahren nach Anspruch 12, **dadurch gekennzeichnet, dass** ein gefärbter Kunststoffstrang in einen anderen farblosen Kunststoffstrang derart extrudiert wird, dass eine einzige Folie aus thermoplastischem Material erhalten wird, deren Breite mindestens gleich der gewünschten Breite der Zwischenschicht ist.

14. Verfahren nach Anspruch 12, **dadurch gekennzeichnet, dass** mindestens eine transparente Folie (11) aus thermoplastischem Material und mindestens eine Folie (12) aus thermoplastischem Material, die gefärbt ist oder an einem ihrer Längsränder ein Farbband (6) enthält, assembliert werden, insbesondere, indem sie nebeneinander angeordnet werden, wobei die Summe der jeweiligen Breiten der zwei Folien mindestens gleich der Breite der Zwischenschicht (10) ist.

15. Verfahren nach Anspruch 14, **dadurch gekennzeichnet, dass** zwei Folien (11, 12) assembliert werden, die aus demselben thermoplastischen Material, vorzugsweise PVB, hergestellt sind.

16. Verfahren nach Anspruch 14 oder 15, **dadurch gekennzeichnet, dass** das Assemblieren durch Verschweißen, gegebenenfalls, indem mechanischer Druck ausgeübt wird, erfolgt.

17. Verfahren nach Anspruch 16, **dadurch gekennzeichnet, dass** das Verschweißen bei einer Temperatur von Erweichungstemperatur bis Schmelztemperatur des/der thermoplastischen Materials/Materialien, insbesondere zwischen 200 und 250 °C, erfolgt.

18. Verfahren nach Anspruch 15 oder 17, **dadurch gekennzeichnet, dass** ein wenigstens oberflächliches Verschweißen der zwei nebeneinander liegenden Folien (11, 12) derart durchgeführt wird, dass über eine Tiefe p von mindestens 20 % der Dicke dieser Folien das Schmelzen des/der thermoplastischen Materials/Materialien erreicht wird.

19. Verfahren nach einem der Ansprüche 16 bis 18, **dadurch gekennzeichnet, dass** über die gesamte Assemblierungslinie ein kontinuierliches Verschweißen durchgeführt wird.

20. Anwendung des Verfahrens nach einem der Ansprüche 12 bis 19 auf die Herstellung von Verbundglasscheiben wie Frontscheiben, Seitenscheiben und Heckscheiben für Kraftfahrzeuge.
